# EUROPÄISCHE PATENTANMELDUNG

(11) **EP 2 295 351 A2**
(43) Veröffentlichungstag der Anmeldung: **16.03.2011**
(21) Anmeldenummer: 10172046.4
(22) Anmeldetag: 05.08.2010
(51) Int. Cl.: B65G 47/52, B65G 47/70

(54) **Vorrichtung und Verfahren zum Bilden einer Gebindesequenz**

(30) Priorität: 11.09.2009 DE 102009041239
(71) Anmelder: Krones AG, 93073 Neutraubling (DE)
(72) Erfinder: Wünsche, Dieter, 94315, Straubing (DE); Tiebel, Peter, 93077, Bad Abbach (DE)
(74) Vertreter: Grünecker, Kinkeldey, Stockmair & Schwanhäusser Anwaltssozietät

(57) **Zusammenfassung**

Die Erfindung umfasst ein Verfahren zum Bilden einer Gebindesequenz, insbesondere von Gebinden eines oder mehrerer Artikel, insbesondere Getränkeartikel, mit einer Sequenzbildeeinrichtung (106), wobei ein Gebindespeicher (102) zum Speichern von Gebinden mit der Sequenzbildeeinrichtung (106) über wenigstens eine Transportstrecke verbunden ist, das Verfahren umfassend Transportieren eines Gebindes auf der wenigstens einen Transportstrecke vom Gebindespeicher (102) zur Sequenzbildeeinrichtung (106), wobei der Transport des Gebindes derart gesteuert wird, dass das Gebinde zu einem vorherbestimmten Zeitpunkt in die Sequenzbildeeinrichtung (106) eingeschleust wird.

## Beschreibung

Die Erfindung betrifft eine Vorrichtung und ein Verfahren zum Bilden einer Gebindesequenz, insbesondere von Gebinden eines oder mehrerer Getränkeartikel, mit einer Sequenzbildeeinrichtung, wobei ein Gebindespeicher zum Speichern von Gebinden mit der Sequenzbildeeinrichtung über wenigstens eine Transportstrecke verbunden ist.

Insbesondere in der Getränkeindustrie wird häufig eine Gebindesequenz aus verschiedenartigen Gebinden gebildet, die kundenspezifisch zu einem Verband von Gebinden, insbesondere einer Zielpalette, kommissioniert wird. Dafür ist häufig ein Sequenzbildeelement vorgesehen, welches Gebinde aus vorgelagerten Pufferplätzen entnimmt und zu der kundenspezifischen Gebindesequenz zusammenfügt.

Die Zielpalette kann eine aus mehreren unterschiedlichen Gebinden gemischte Palette sein, insbesondere durch Vorgaben von Kundenaufträgen. Die gemischte Palette kann aber auch eine Arbeitsvorbereitung, die Basis für eine Weitere Kommissionierstufe darstellen. Die kundenspezifische Palette oder Zielpalette kann ein Verband aus einem oder mehreren unterschiedlichen Gebinden, insbesondere eine gemischte Palette sein, insbesondere durch Vorgaben von einem oder mehreren Kundenaufträgen oder durch Vorgaben von einem oder mehreren Aufträgen zur Unterstützung weiterer interner wie externer Geschäftsprozesse, insbesondere Verteilen, Montieren, Umpacken, Konfektionieren, Kommissionieren, etc..

Die Pufferplätze werden üblicherweise über einen Gebindespeicher besetzt, der mit Gebinden von, insbesondere artikelreinen, Verbänden von Gebinden, insbesondere Produktionspaletten, beladen wird. Solch ein Gebindespeicher weist üblicherweise mehrere Ebenen auf, wobei jede der Ebenen mehrere Speicherbahnen umfasst. Die Speicherbahnen sind dabei meist artikelrein bestückt, d.h. jede Speicherbahn umfasst Gebinde von nur einem Getränkeartikel. Für jede Ebene des Gebindespeichers werden üblicherweise Teilsequenzen auf einem Förderer zusammengefasst und auf Pufferplätzen vor dem Sequenzbildeelement bereitgestellt.

Es ist auch möglich, dass in einem Gebindespeicher unterschiedliche Artikel einlagert werden. Dies ist z.B. der Fall, wenn in einem vorangehenden Geschäftsprozess z.B. einer manuellen Kommissionierstufe gemischte Sequenzen gebildet wurden.

Da die Gebindesequenzen in einer Kommissionieranlage sehr unterschiedlich ausfallen können, wird eine große Anzahl an Pufferplätzen benötigt, um sicherstellen zu können, dass ein benötigtes Gebinde rechtzeitig zum Einschleusen in das Sequenzbildeelement bereitsteht. Gebindesequenzen können insbesondere sehr unterschiedlich in der Ordnung der Gebinde als auch in den physischen Eigenschaften der Gebinde sein. Bei der Bildung von Gebindesequenzen kann es zu hohen Durchsatzleistungen kommen, die in der Folge eine große Anzahl an Pufferplätzen vor den Sequenzbildungseinrichtungen erfordern können. Insbesondere wenn die Zeiten für die Bereitstellung aus den Quellen, den Gebindespeichern hin zur Sequenzbildungseinrichtung länger sind als die erforderliche Reaktionszeit, die die Leistungsanforderungen der Senken, d.h. der Sequenzbildungseinrichtungen vorgeben.

Dies erfordert einen hohen Raumbedarf und eine entsprechende Dimensionierung der Kommissionieranlage.

Daher ist es Aufgabe der vorliegenden Erfindung, eine Vorrichtung und ein Verfahren bereitzustellen, um die Bildung von Gebindesequenzen in einer Kommissionieranlage platzsparender und mit weniger technischen Aufwand und Kosten durchführen zu können. Diese Aufgabe wird durch den Gegenstand der Patentansprüche 1 und 10 gelöst.

Das erfindungsgemäße Verfahren zum Bilden einer Gebindesequenz, insbesondere von Gebinden eines oder mehrerer Artikel, insbesondere Getränkeartikel, mit einer Sequenzbildeeinrichtung, wobei ein Gebindespeicher zum Speichern von Gebinden mit der Sequenzbildeeinrichtung über wenigstens eine Transportstrecke verbunden ist, umfasst das Transportieren eines Gebindes auf der wenigstens einen Transportstrecke vom Gebindespeicher zur Sequenzbildeeinrichtung, wobei der Transport des Gebindes derart gesteuert wird, dass das Gebinde zu einem vorherbestimmten Zeitpunkt in die Sequenzbildeeinrichtung eingeschleust wird.

Durch den gesteuerten Transport des Gebindes können Pufferplätze vor der Sequenzbildeeinrichtung eingespart werden. Dadurch lässt sich der Platzaufwand für die Kommissionieranlage verringern.

Ein Gebinde kann die Gesamtheit aus Packgut und Verpackung bezeichnen. Ein Gebinde kann einer Stock Keeping Unit (SKU) entsprechen. Insbesondere kann ein Gebinde eines Getränkeartikels einem Getränk und der zugehörigen Verpackung entsprechen. Ein Gebinde kann auch einem Großgebinde entsprechen, wobei ein Großgebinde eine Mehrzahl von Einzelgebinden umfasst. Beispielsweise kann es sich bei einem Gebinde um eine Getränkekiste mit Flaschen, die mit einem Getränk gefüllt sind, handeln. Ein Gebinde kann auch ein Karton oder ein Shrink-Pack sein.

Die Gebinde können Gebinde eines oder mehrerer Getränkeartikel und/oder Lebensmittel, Handelsprodukte und/oder Behälter und Pakete im Allgemeinen sein.

Die Gebindesequenz kann insbesondere bezüglich der Gebinde geordnet sein. Die Gebindesequenz kann eine oder mehrere Teilsequenzen umfassen. Die zu bildende Gebindesequenz kann wenigstens ein Gebinde, insbesondere zwei oder mehrere Gebinde, umfassen. Die Gebinde der zu bildenden Gebindesequenz können Gebinde eines oder mehrerer, insbesondere unterschiedlicher, Artikel, insbesondere Getränkeartikel sein.

Mit anderen Worten kann die zu bildende Gebindesequenz einer Menge von Gebinden entsprechen, umfassend eine oder mehrere Teilsequenzen oder Teilmengen von Gebinden, insbesondere Teilsequenzen unterschiedlicher Gebinde.

Das Verfahren zum Bilden einer Gebindesequenz kann ein automatisches oder automatisiertes Verfahren sein.

Die Sequenzbildeeinrichtung kann einem Stetigförderer, insbesondere einem Spiralförderer, entsprechen oder einen Stetigförderer, insbesondere einen Spiralförderer, umfassen.

Die wenigstens eine Transportstrecke kann in die Sequenzbildeeinrichtung, insbesondere in den Spiralförderer oder Stetigförderer der Sequenzbildeeinrichtung münden. Mit anderen Worten kann ein Gebinde über die wenigsten eine Transportstrecke in die Sequenzbildeeinrichtung, insbesondere in den Spiralförderer oder Stetigförderer der Sequenzbildeeinrichtung, eingeschleust werden.

Die Transportstrecke kann ein oder mehrere Förderelemente, insbesondere einen oder mehrere Stetigförderer umfassen oder einem Förderelement entsprechen. Das Förderelement kann beispielsweise ein Rollenförderer, ein Bandförderer und/oder ein Kettenförderer sein. Der Transport eines Gebindes auf der wenigstens einen Transportstrecke kann durch das Eigengewicht des Gebindes und/oder angetrieben erfolgen.

Der Gebindespeicher oder Gebindepuffer kann mehrere Speicherelemente, insbesondere Speicherbahnen, zum Speichern von Gebinden umfassen. Die Speicherbahnen des Gebindespeichers können insbesondere in unterschiedlichen vertikalen Ebenen angeordnet sein. Jede Speicherbahn des Gebindespeichers kann artikelrein sein, d.h. Gebinde von nur einem Getränkeartikel umfassen.

Jede Speicherbahn des Gebindespeichers kann mit der Sequenzbildeeinrichtung über eine Transportstrecke verbunden sein. Transportstrecken von Speicherbahnen einer Ebene des Gebindespeichers können unterschiedlichen Teilstrecken eines Förderelementes entsprechen. Transportstrecken unterschiedlicher Speicherbahnen können sich dann durch ihre Länge unterscheiden. Es kann auch für jede Speicherbahn ein Förderelement vorgesehen sein. In diesem Fall kann jede Transportstrecke einem Förderelement entsprechen.

Der Transport eines Gebindes auf der wenigstens eine Transportstrecke kann durch Steuerung der Startzeit des Transportes und/oder durch Steuerung der Geschwindigkeit des Transportes des Gebindes auf der wenigstens einen Transportstrecke gesteuert werden.

Das Verfahren kann außerdem ein Bestimmen eines Startzeitpunktes für den Transport basierend auf der Zeitdauer für das Fördern eines Gebindes auf der wenigstens einen Transportstrecke umfassen. Die Zeitdauer für das Fördern kann basierend auf der Länge der Transportstrecke und der Geschwindigkeit, mit der ein Gebinde auf der Transportstrecke transportiert wird, bestimmt werden. Das Verfahren kann insbesondere ein Bestimmen der Zeitdauer für das Fördern eines Gebindes auf der wenigstens einen Transportstrecke umfassen.

Das Verfahren zum Bestimmen von Startzeitpunkten für den jeweiligen Transport kann auch Puffer- bzw. Sicherheitszeiten, unterschiedlich je Speicherbahn bzw. je erforderlicher Förderstrecke auf einer Transportstrecke, berücksichtigen, wobei dann eine Pufferung der Gebinde vor der Sequenzbildeeinrichtung erforderlich ist. Diese Puffer- bzw. Sicherheitszeiten können dabei bevorzugt derart dimensioniert sein, dass die Sequenzbildung nicht gestört wird, beispielsweise durch das Überholen innerhalb einer geplanten Sequenz.

Das Verfahren kann außerdem ein Empfangen eines Auftrages zum Bilden einer Gebindesequenz und Bestimmen wenigstens eines Zeitpunktes, zu dem ein Gebinde des Auftrages in die Sequenzbildeeinrichtung eingeschleust werden muss, umfassen. Der Auftrag zum Bilden einer Gebindesequenz kann einem Kommissionierungsauftrag entsprechen. Der Auftrag kann die zu bildende Gebindesequenz oder einen Anteil davon umfassen.

Das Verfahren kann für jedes Gebinde des Auftrages ein Bestimmen eines Zeitpunktes, zu dem ein Gebinde des Auftrages in die Sequenzbildeeinrichtung eingeschleust werden muss, umfassen.

Der wenigstens eine nach dem Empfangen eines Auftrages bestimmte Zeitpunkt kann dem vorherbestimmten Zeitpunkt zu dem das Gebinde in die Sequenzbildeeinrichtung eingeschleust wird, entsprechen. Insbesondere kann das Bestimmen eines Startzeitpunktes für den Transport basierend auf der Zeitdauer für das Fördern des Gebindes auf der wenigstens einen Transportstrecke und auf dem vorherbestimmten Zeitpunkt erfolgen.

Die Sequenzbildeeinrichtung kann ein Fördermedium umfassen, wobei eine zum Fördern eines Gebindes physikalisch verfügbare Strecke des Fördermediums um eine virtuelle Förderstrecke verlängert wird.

Die virtuelle Verlängerung kann durch ein Steuerungselement, beispielsweise ein Softwaremodul, zur Steuerung der Kommissionieranlage erfolgen. Virtuell verlängern kann bedeuten, dass die zum Fördern des Gebindes verfügbare Strecke rechnerisch verlängert wird. Mit anderen Worten kann die zum Fördern eines Gebindes vorgesehene Strecke des Fördermediums der Sequenzbildeeinrichtung, welche der Steuerung der Anlage zugrunde liegt, um einen virtuellen Streckenanteil größer sein als die physikalische Zeit, die zum Fördern eines Gebindes verfügbar ist.

Die Strecke mit virtuellem und physischen Anteilen kann in virtuelle Abschnitte unterteilt werden. Dadurch ist eine Steuerung der Anlage in Fenstertechnik möglich, d. h. die Zuordnung eines Abschnittes oder Fensters des Fördermediums zu einem Gebinde, insbesondere eines Auftrages, und Verfolgung desselben auf dem Fördermedium. Mit anderen Worten kann einem Abschnitt durch einen Auftrag virtuell oder rechnerisch ein Gebinde zugeteilt werden.

Die wenigstens eine Transportstrecke zwischen Gebindespeicher und Sequenzbildeeinrichtung kann auch virtuell in Abschnitte unterteilt werden. Auch hier kann virtuell bedeuten, dass die wenigstens eines Transportstrecke rechnerisch, insbesondere durch ein Steuerungselement, in Abschnitte oder Fenster unterteilt wird.

Ein Abschnitt der wenigstens einen Transportstrecke kann mit einem Abschnitt des Fördermediums der Sequenzbildeeinrichtung synchronisiert werden, insbesondere wobei zwei derart synchronisierte Abschnitte zeitgleich an einem Einschleusepunkt der wenigstens einen Transportstrecke in das Fördermedium der Sequenzbildeeinrichtung vorliegen. Dadurch kann ein vorherbestimmtes Gebinde auf einem vorherbestimmten virtuellen Abschnitt des Fördermediums angeordnet werden. Die Sequenzbildeeinrichtung kann also einer Synchronisationseinrichtung entsprechen.

Mit anderen Worten kann das Verfahren zum Bilden einer Gebindesequenz ein Empfangen eines Auftrages zum Bilden einer Gebindesequenz umfassen, wobei durch den Auftrag einem virtuellen Abschnitt der virtuell verlängerten Strecke des Fördermediums der Sequenzbildeeinrichtung ein Gebinde zugeteilt wird, wobei der Abschnitt mit dem virtuell zugeteilten Gebinde durch die Bewegung des Fördermediums der Sequenzbildeeinrichtung bewegt wird und wobei das Transportieren eines Gebindes auf der wenigstens einen Transportstrecke ein Synchronisieren eines Abschnittes der wenigstens einen Transportstrecke mit dem Abschnitt mit dem virtuell zugeteilten Gebinde des Fördermediums umfasst.

Insbesondere kann das Verfahren ein Anordnen eines Gebindes auf dem synchronisierten Abschnitt der wenigstens einen Transportstrecke umfassen. Das Gebinde kann dabei einer Speicherbahn entnommen werden, insbesondere wobei die Speicherbahn und damit das Gebinde basierend auf dem Auftrag bestimmt wurden.

Da die Abschnitte synchronisiert sind, können das Gebinde und der Abschnitt des Fördermediums zeitgleich an einem Einschleusepunkt der Sequenzbildeeinrichtung vorliegen. Dadurch kann das Gebinde auf dem Abschnitt des virtuell verlängerten Fördermediums angeordnet werden. Für einen robusten Praxisbetrieb können hierbei gezielt Puffer- bzw. Sicherheitszeiten berücksichtigt werden.

Die Sequenz von Gebinden kann mehrere, insbesondere zwei oder mehr, Gebinde umfassen, wobei die Schritte eines jeden der oben beschriebenen Verfahren für jedes Gebinde der Sequenz durchgeführt werden.

Insbesondere kann das Verfahren zum Bilden einer Gebindesequenz für jedes Gebinde der Gebindesequenz ein Transportieren des Gebindes auf der wenigstens einen Transportstrecke vom Gebindespeicher zur Sequenzbildeeinrichtung umfassen, wobei der Transport des Gebindes derart gesteuert wird, dass das Gebinde zu einem vorherbestimmten Zeitpunkt in die Sequenzbildeeinrichtung eingeschleust wird.

Es können auch mehrere Sequenzbildeeinrichtungen vorgesehen sein. Insbesondere können in einer Anlage oder einem Gesamtsystem mehrere Sequenzbildeeinrichtungen sequentiell, parallel oder anderer Ausprägung verknüpft sein, insbesondere welche ihrerseits gemäß einem der oben beschriebenen Verfahren in die Steuerung der Gebindetransporte in der Anlage bzw. des Gesamtsystem einbezogen werden können.

Die Erfindung stellt außerdem eine Vorrichtung zum Bilden einer Gebindesequenz, insbesondere von Gebinden eines oder mehrerer Artikel, insbesondere Getränkeartikel, bereit, umfassend eine Sequenzbildeeinrichtung zum Bilden der Sequenz von Gebinden, einen Gebindespeicher zum Speichern von Gebinden, wenigstens eine Transportstrecke, die den Gebindespeicher mit der Sequenzbildeeinrichtung verbindet, und ein Steuerungselement, das konfiguriert ist, den Transport eines Gebindes auf der wenigstens einen Transportstrecke derart zu steuern, dass das Gebinde zu einem vorherbestimmten Zeitpunkt in die Sequenzbildeeinrichtung eingeschleust wird.

Die Vorrichtung, insbesondere die Sequenzbildeeinrichtung, der Gebindespeicher, die wenigstens eine Transportstrecke und/oder das Steuerungselement können eines oder mehrere der oben beschriebenen Merkmale aufweisen.

Die Vorrichtung kann Teil einer Kommissionieranlage sein oder einer Kommissionieranlage entsprechen.

Weitere Merkmale und Vorteile werden nachfolgend anhand der beispielhaften Figuren erläutert. Dabei zeigt
- Figur 1: eine beispielhafte Vorrichtung zum Bilden einer Gebindesequenz mit mehre- ren verknüpften Sequenzbildeeinrichtungen;
- Figur 2: eine Illustration einer virtuellen Verlängerung einer zum Fördern eines Gebin- des verfügbaren Strecke eines Fördermediums einer Sequenzbildeeinrich- tung; und
- Figur 3: eine Illustration virtueller Abschnitte auf beispielhaften Transportstrecken von einem Gebindespeicher zu einer Sequenzbildeeinrichtung.

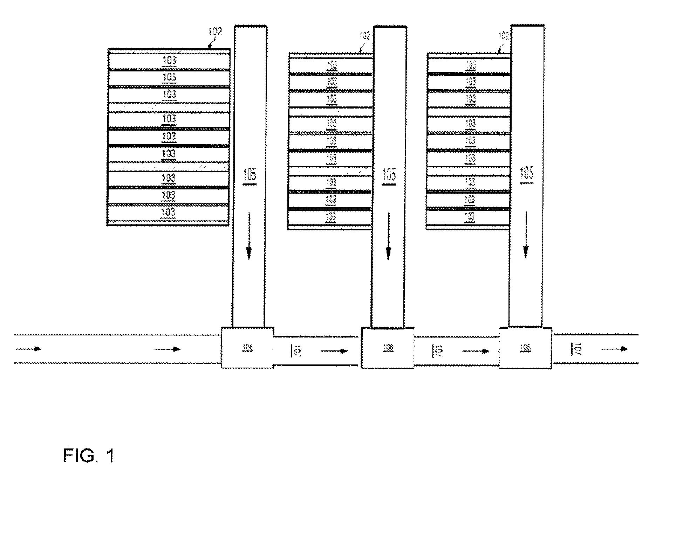

Figur 1 zeigt eine beispielhafte Vorrichtung zum Bilden einer Gebindesequenz umfassend drei Gebindespeicher 102, die wiederum mehrere Speicherbahnen 103 umfassen, welche in Förderelemente 105 münden. Die Förderelemente 105 sind mit je einer Sequenzbildeeinrichtung 106 verbunden. Die gebildete Sequenz kann dann auf einem Fördermedium 107 bereitgestellt oder abtransportiert werden.

Jedes der Förderelemente 105 kann einem Zuförderer, insbesondere einem Zuförderband, entsprechen. Jede der Sequenzbildeeinrichtungen 106 kann ein Abförderband umfassen.

Die Sequenzbildeeinrichtungen 106 oder Synchronisationseinrichtung können insbesondere ein Stetigförderer, insbesondere ein Spiralförderer, sein. Es können auch noch weitere Sequenzbildeeinrichtungen 106 vorgesehen bzw. verknüpft sein, wie in Figur 1 zu sehen ist. Die mehreren Speicherbahnen 103 einer Ebene des Gebindespeichers sind mit der Sequenzbildeeinrichtung 106 über je eine Transportstrecke verbunden. Die Transportstrecken sind auf dem Förderelement 105 angeordnet, insbesondere entsprechen sie Teilstrecken des Förderelements 105. Sowohl die Transportstrecke zwischen jedem der Speicherbahnen 103 und jeder der Sequenzbildeeinrichtungen 106 als auch das Fördermedium der Sequenzbildeeinrichtungen 106 können in Abschnitte oder Fenster unterteilt werden.

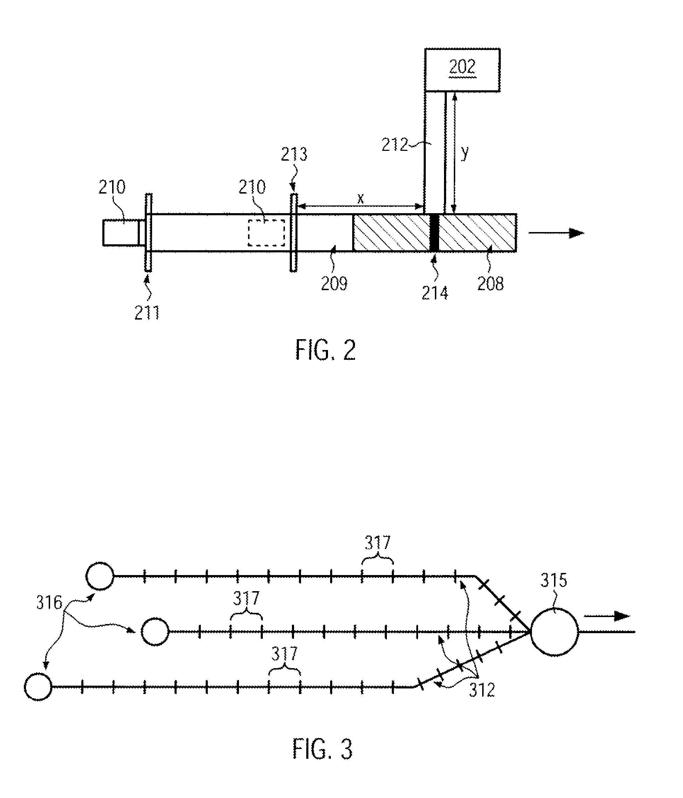

Figur 2 illustriert eine virtuelle Verlängerung der zum Fördern eines Gebindes verfügbaren Strecke eines Fördermediums einer Sequenzbildeeinrichtung. Die virtuelle Verlängerung sowie die gesamte Steuerung der beispielhaften Vorrichtung zum Bilden einer Gebindesequenz können durch ein entsprechendes Softwaremodul durchgeführt werden.

In Figur 2 ist die tatsächlich, physikalisch verfügbare Strecke 208 des Fördermediums der Sequenzbildeeinrichtung sowie deren virtuelle Verlängerung 209 gezeigt. Die virtuell verlängerte Strecke kann in virtuelle Abschnitte unterteilt werden. Figur 2 zeigt ein Beispiel für einen solchen virtuellen Abschnitt 210.

Nach dem Empfangen eines Auftrages kann einem der virtuellen Abschnitte, beispielsweise dem beispielhaften Abschnitt 210, virtuell ein Gebinde zugeteilt werden. Dies kann beispielsweise am Beginn 211 der virtuellen Strecke geschehen, d. h. sobald der virtuelle Abschnitt 210 verfügbar ist. Der beispielhafte Abschnitt 210 wird durch die Bewegung des Fördermediums entlang der virtuellen Strecke bewegt.

Der Einschleuseort oder Einschleusepunkt 214, an dem eine beispielhafte Förderstrecke 212 in die physikalische Strecke 208 mündet, ist in Figur 2 gezeigt. Wenn der beispielhafte Abschnitt 210 den Einschleusepunkt 214 erreicht, soll das auftragsgemäße Gebinde, welches dem Abschnitt 210 zugeordnet wurde, auf dem Abschnitt 210 angeordnet werden. Hierfür wird der Zeitpunkt, zu dem das Gebinde in die Sequenzbildeeinrichtung, insbesondere in die physikalische Strecke 208, eingeschleust werden soll bestimmt. Basierend auf der Zeitdauer für das Fördern des Gebindes vom Gebindespeicher 202 zum Einschleusepunkt 214 kann dann ein Startzeitpunkt für den Transport des Gebindes bestimmt werden. Sobald der beispielhafte Abschnitt 210 die Position 213 passiert, kann der Transport des Gebindes von dem Gebindespeicher 202 zum Einschleusepunkt 214 der Sequenzbildeeinrichtung gestartet werden. In diesem Beispiel ist die Strecke zwischen der Position 213 und dem Einschleusepunkt 214, x, gleich der Transportstrecke, y, zwischen dem Gebindespeicher 202 und dem Einschleusepunkt 214, d. h. x=y. In diesem Fall ist die Fördergeschwindigkeit auf der beispielhaften Transportstrecke 212 gleich der Fördergeschwindigkeit auf dem Fördermedium der Sequenzbildeeinrichtung.

Die Geschwindigkeiten der Förderstrecke und des Fördermediums können auch unterschiedlich sein. In diesem Fall kann die Zeit, die ein einem Transportauftrag zugeordnetes Fenster am Fördermedium der Sequenzbildeeinrichtung bis zum Einschleusepunkt 214 benötigt, gleich sein der Zeit, die ein Fenster oder Abschnitt mit gleichem Transportauftrag und beladen mit dem physikalischen Gebinde von dem Gebindespeicher 202 über die Transportstrecke 212 bis zum Einschleusepunkt 214 in das reservierte Fenster 210 auf dem Fördermedium der Sequenzbildeeinrichtung benötigt.

Figur 3 zeigt eine Illustration eines beispielhaften Verfahrens zum Bilden einer Gebindesequenz. Insbesondere zeigt Figur 3 schematisch drei Gebindequellen 316, welche beispielsweise Speicherbahnen eines Gebindespeichers entsprechen können. Die Quellen 316 sind mit einem Synchronisationspunkt 315 über Transportstrecken 312 verbunden. Der Synchronisationspunkt 315 kann beispielsweise der Sequenzbildeeinrichtung, insbesondere dem Einschleusepunkt der Transportstrecke in ein Fördermedium der Sequenzbildeeinrichtung, entsprechen. Die beispielhaften Transportstrecken 312 können unterschiedlichen Förderelementen oder unterschiedlichen Teilstrecken eines Förderelements entsprechen.

Figur 3 zeigt außerdem beispielhafte Abschnitte oder Fenster 317 auf den Transportstrecken 312, die sich durch die Bewegung des Förderelements zwischen Quellen 316 und Synchronisationspunkt 315 Richtung Synchronisationspunkt 315 bewegen. Die beispielhaften Abschnitte 317 können Zeitfenstern oder Zeiteinheiten entsprechen. Für das bewältigen der Transportstrecken 312 ist auf Basis dieser Einteilung immer eine definiert oder vorherbestimmte Anzahl von Zeitfenstern oder Zeiteinheiten erforderlich. Mit anderen Worten benötigt ein beispielhafter Abschnitt 317 für das Durchlaufen der Transportstrecke 312 eine vorherbestimmte oder definierte Zeitdauer.

Aus Sicht des Synchronisationspunktes 315 kann der Transport eines Gebindes auf einer beispielhaften Transportstrecke 312 derart organisiert oder gesteuert werden, dass der Transport eines Gebindes an einer Quelle 316 so gestartet wird, dass der bewegte Abschnitt 317 mit dem darauf angeordneten Gebinde zu einem gewünschten oder vorherbestimmten Zeitpunkt am Synchronisationspunkt 315 ankommt.

Es versteht sich, dass in den zuvor beschriebenen Ausführungsbeispielen genannte Merkmale nicht auf diese speziellen Kombinationen beschränkt sind und auch in beliebig anderen Kombinationen möglich sind.

## Patentansprüche

1. Verfahren zum Bilden einer Gebindesequenz, insbesondere von Gebinden eines oder mehrerer Artikel, insbesondere Getränkeartikel, mit einer Sequenzbildeeinrichtung (106), wobei ein Gebindespeicher (102; 202) zum Speichern von Gebinden mit der Sequenzbildeeinrichtung (106) über wenigstens eine Transportstrecke (212; 312) verbunden ist, das Verfahren umfassend:
Transportieren eines Gebindes auf der wenigstens einen Transportstrecke (212; 312) vom Gebindespeicher (102; 202) zur Sequenzbildeeinrichtung (106),
wobei der Transport des Gebindes derart gesteuert wird, dass das Gebinde zu einem vorherbestimmten Zeitpunkt in die Sequenzbildeeinrichtung (106) eingeschleust wird.

2. Verfahren nach Anspruch 1, außerdem umfassend Bestimmen eines Startzeitpunktes für den Transport basierend auf der Zeitdauer für das Fördern eines Gebindes auf der wenigstens einen Transportstrecke (212; 312).

3. Verfahren nach Anspruch 1 oder 2, außerdem umfassend Empfangen eines Auftrages zum Bilden einer Gebindesequenz und Bestimmen wenigstens eines Zeitpunktes zu dem ein Gebinde des Auftrages in die Sequenzbildeeinrichtung (106) eingeschleust werden muss.

4. Verfahren nach einem der vorangegangenen Ansprüche, wobei die Sequenzbildeeinrichtung (106) ein Fördermedium umfasst, und wobei eine zum Fördern eines Gebindes physikalisch verfügbare Strecke des Fördermediums virtuell um eine Förderstrecke verlängert wird.

5. Verfahren nach Anspruch 4, wobei die virtuell verlängerte Strecke virtuell in Abschnitte (210) unterteilt wird.

6. Verfahren nach Anspruch 5, wobei einem Abschnitt (210) durch einen Auftrag virtuell ein Gebinde zugeteilt wird.

7. Verfahren nach einem der vorangegangenen Ansprüche, wobei die wenigstens eine Transportstrecke (212; 312) zwischen Gebindespeicher (102; 202) und Sequenzbildeeinrichtung (106) virtuell in Abschnitte (317) unterteilt wird.

8. Verfahren nach Anspruch 7, wobei ein Abschnitt (317) der wenigstens einen Transportstrecke (212; 312) mit einem Abschnitt (210) des Fördermediums der Sequenzbildeeinrichtung (106) synchronisiert wird, insbesondere wobei zwei derart synchronisierte Abschnitte zeitgleich an einem Einschleusepunkt der wenigstens einen Transportstrecke (212; 312) in das Fördermedium der Sequenzbildeeinrichtung (106) vorliegen.

9. Verfahren nach einem der vorangegangenen Ansprüche, wobei die Sequenz von Gebinden mehrere Gebinde umfasst, und wobei die Schritte des Verfahrens nach einem der vorangegangenen Ansprüche für jedes Gebinde der Sequenz durchgeführt werden.

10. Vorrichtung zum Bilden einer Sequenz von Gebinden, insbesondere von Gebinden eines oder mehrerer Artikel, insbesondere Getränkeartikel, umfassend:
eine Sequenzbildeeinrichtung (106) zum Bilden der Sequenz von Gebinden;
einen Gebindespeicher (102; 202) zum Speichern von Gebinden;
wenigstens eine Transportstrecke (212; 312), die den Gebindespeicher (102; 202) mit der Sequenzbildeeinrichtung (106) verbindet; und
ein Steuerungselement, das konfiguriert ist, den Transport eines Gebindes auf der wenigstens einen Transportstrecke (212; 312) derart zu steuern, dass das Gebinde zu einem vorherbestimmten Zeitpunkt in die Sequenzbildeeinrichtung (106) eingeschleust wird.
